# EUROPEAN PATENT SPECIFICATION

(11) **EP 2 653 755 B1**
(45) Date of publication and mention of the grant of the patent: **25.12.2019**
(21) Application number: 12002790.9
(22) Date of filing: 20.04.2012
(51) Int. Cl.: F16H 61/688

(54) **Method of controlling a double clutch transmission**
Verfahren zur Steuerung eines Doppelkupplungsgetriebes
Procédé de contrôle d'une transmission à double embrayage

(43) Date of publication of application: 23.10.2013
(73) Proprietor: Transmisiones y Equipos Mecánicos, S.A. de C.V., Queretaro, 76120 (MX)
(72) Inventor: De Visscher, Nico, 9270 Laarne (BE)
(74) Representative: De Clercq & Partners

(56) References cited:
- EP-A2- 2 065 623
- WO-A1-95/09741
- JP-A- 2008 180 260

## Description

The invention concerns a method of controlling a double clutch in a vehicle transmission and in particular as method with which an engine braking effect can be used in an optimized manner during downshift.

Double clutch transmissions are known. They use two sets of gears and two clutches which are controlled such that an uninterrupted torque transmission is possible.

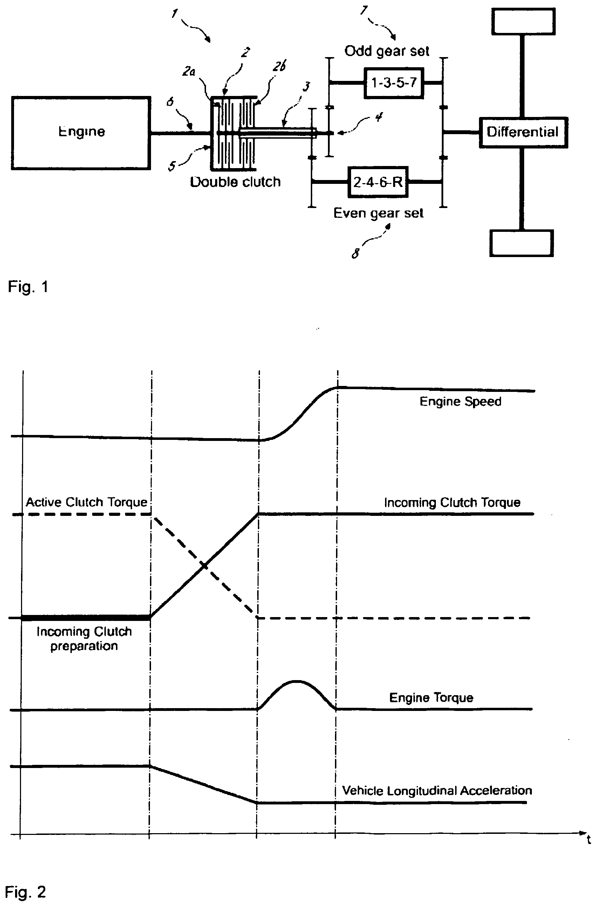

Figure 1 shows an example of a Double Clutch Transmission (DCT) 1 which is adapted for transmitting a torque from an engine E to a differential D to which two vehicle wheels are operatively connected. Double Clutch Transmission 1 comprises a double clutch 2 with a hollow shaft 3 and a central output shaft 4. The clutch housing 5 is connected to the engine crankshaft 6. Both clutches 2a, 2b of clutch 2 are controlled by hydraulic pistons (not shown) integrated into the clutch housing 5. The central and hollow shafts 4 and 3 are connected to two separate gear sets 7, 8 each with their own synchronizers (not shown). One shaft 4 drives gear set 7 which comprises the odd gear ratios while the other shaft 3 drives gear set 8 which comprises the even gear ratios. While one clutch 2a or 2b is active, meaning that torque from engine E is being transferred to the respective gear set 7, 8, the other clutch 2b or 2a remains open, meaning that no torque is being transferred to the respective other gear set 8, 7. Accordingly, a new gear can be selected via the synchronizer actuators among the gears in the currently inactive gear set 8, 7.

By alternately coupling the central and the hollow shaft - with the synchronizers having selected the correct gear - gear shifts can be performed.

Conventional braking downshifts are performed as overlap shifts, meaning the engine braking torque is transferred to the wheels during the whole shift while the engine speed is synchronized to the speed of the incoming clutch by means of an increase of engine torque. "Increase of engine torque" here means that fuel is injected by the motor control so as to increase the engine speed.

Figure 2 shows a conventional braking downshift where the engine speed is synchronized by increasing the engine torque, resulting in an increase of engine speed. This results in a smooth and comfortable transition from the active gear which is selected prior to downshifting, to the lower gear. The disadvantage of this way of downshifting is that an engine torque increase is required in a vehicle braking conditions where usually no fuel is injected. This is not optimal from a performance and fuel efficiency point of view.

Various methods of controlling a double clutch in a vehicle transmission, in particular during a downshift, are shown in JP 2008 180260 A, EP 2 065 623 A2 and WO 95/09741 A1.

For instance, JP 2008 180260 A describes a method of controlling a vehicle drive train that prevents sudden deceleration of the vehicle due to engine braking.

EP 2 065 623 A2 which discloses the preamble of claim 1, shows a method of controlling a vehicle drive train that suppresses a shift shock that occurs when an accelerator of a vehicle is operated during downshifting while the vehicle is coasting.

It is therefore an object of the present invention to provide a simple and cost effective method to maximize vehicle braking performance and fuel efficiency during braking downshifts.

In order to achieve this object the invention provides a method of controlling a vehicle drive train having an engine and a double clutch transmission during braking downshift, said transmission comprising two clutches one of which is transmitting engine braking torque being the active clutch whilst the other one constituting the incoming clutch associated with a lower gear, wherein there is a torque handover phase in which the overall engine braking torque transmitted by the active clutch and the incoming clutch is constant, followed by an engine synchronizing phase in which the engine speed is synchronized to the speed required by the lower gear, the incoming clutch transmitting, during the synchronizing phase, a torque which is higher than the overall engine braking torque, the vehicle being retarded by a braking moment of the engine after the engine synchronizing phase is completed. A motor control injects additional fuel for assisting engine speed synchronization during the synchronizing phase This method allows to effect a downshift which on the one hand resembles the downshift with a manual gear box and on the other hand is economic as no (or at least less) additional fuel is necessary as compared with conventional downshift strategies employed with a Double Clutch Transmission.

According to a preferred embodiment, the duration of the synchronizing phase and/or the amount by which the torque transmitted via the incoming clutch exceeds the overall engine braking torque during the synchronizing phase, can be varied by a clutch control. This allows adapting the downshift behaviour of the transmission to different driving modes. Further, driveline oscillations can be avoided.

Preferably, the clutch control takes into account driving and environmental conditions like engine speed, applied brake pressure, driving mode settings, observed driving style and vehicle stability control programs.

According to one embodiment of the invention, a motor control injects additional fuel for assisting engine speed synchronization during the synchronizing phase. This allows reducing the engine braking effect during the synchronizing phase.

Preferably, the actuation of the incoming clutch during the synchronizing phase can be calibrated. This allows obtaining a desired clutch characteristic.

The invention will now be described with reference to the enclosed drawings. In the drawings,
- Figure 1 shows a vehicle drive train with a double clutch,
- Figure 2 shows a diagram of some vehicle parameters during a downshift according to the prior art,
- Figure 3 shows a diagram of the same vehicle parameters during a downshift according to a first not claimed embodiment,
- Figure 4 shows a diagram of the same vehicle parameters during a downshift according to an embodiment of the invention, and
- Figure 5 shows a diagram of the same vehicle parameters during a downshift according to a not claimed embodiment.

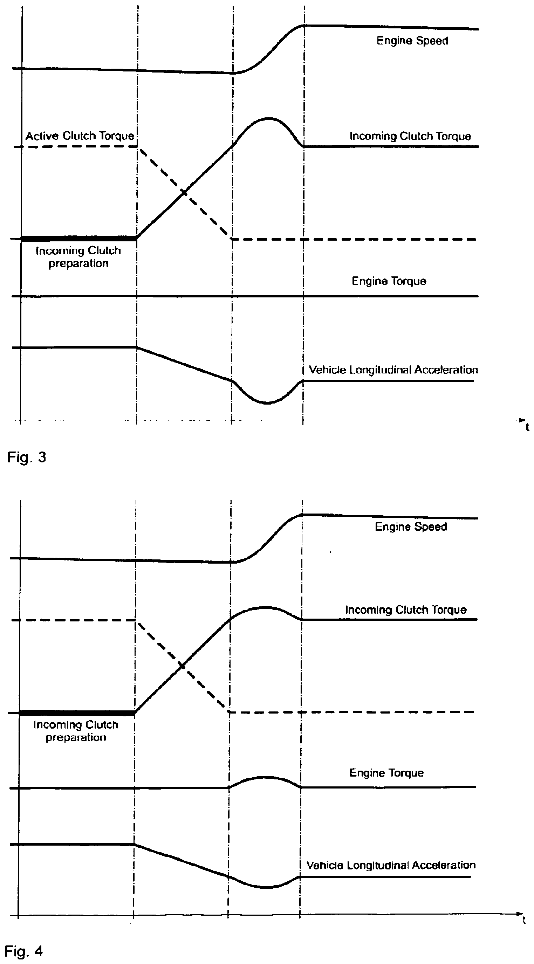

Figure 3 shows the execution and the different phases of a braking downshift according to a first embodiment. One can see that the first phase is the preparation of the incoming clutch, in which the incoming clutch is slightly actuated so that the play is removed. Nothing happens on vehicle acceleration or engine speed.

The first phase is followed by a second phase which is the torque handover phase where the engine braking torque is transferred from the active clutch to the incoming clutch. This phase consists of preparing the incoming clutch to take over torque and the effective torque handover by means of increasing the incoming clutch torque while the active clutch reduces torque. This is made until the complete engine braking torque is transferred by the incoming clutch and the active clutch is completely open. After this phase the engine speed is still at the level of the active clutch. In the vehicle acceleration graph one can see that the acceleration becomes more negative than it already was. This acceleration change is according to the gear ratios of the respective gears of active and incoming clutch shaft.

Then there is a third phase which is the engine synchronizing phase where the engine speed is synchronized to the speed of the incoming clutch. In this phase, the incoming clutch is controlled such that it transmits an "overtorque" as compared to the torque resulting from the engine braking effect, which previously was transmitted by the active clutch and the torque which will later, after completion of the third phase, be transmitted by the incoming clutch. This torque hump formed by the additional incoming clutch torque is used to increase engine speed from the previous level to the new level required for the lower gear, while the engine control does not increase engine torque. The additional torque is visible on the vehicle acceleration profile and can be felt by the driver of the vehicle. One can understand that this additional braking which is limited in time could be considered as a natural and wanted behaviour of the car in some hard braking or performance drive conditions, as it resembles the behaviour of a traditional manual gear drive in which the clutch is released after changing to a lower gear.

The engine speed synchronizing phase is completed when the engine speed is on the level required in view of the new, lower gear. Then, no further active intervention is required, and the vehicle is retarded by the braking moment of the engine.

There however are driving conditions in which the braking moment of the engine should be less pronounced as in Figure 3, in order to provide a smoother downshift which fits a more relaxed coasting drive style. Accordingly, the method according to the invention can be adapted in view of driving and environmental conditions, like the engine speed, applied brake pressure, driving mode settings, observed driving style, vehicle stability control interventions, etc.

Figure 4 shows a braking downshift according to present invention where the engine speed is synchronized to the incoming clutch speed by both increasing the incoming clutch torque and the engine torque. However, the amount by which the engine torque is increased with the embodiment of Figure 4 is less than in the prior art method as shown in Figure 2.

This way of using a combined overtorque and engine torque increase during downshift allows performing a braking downshift with a partial performance increase and a partial discomfort according the shift of Figure 2.

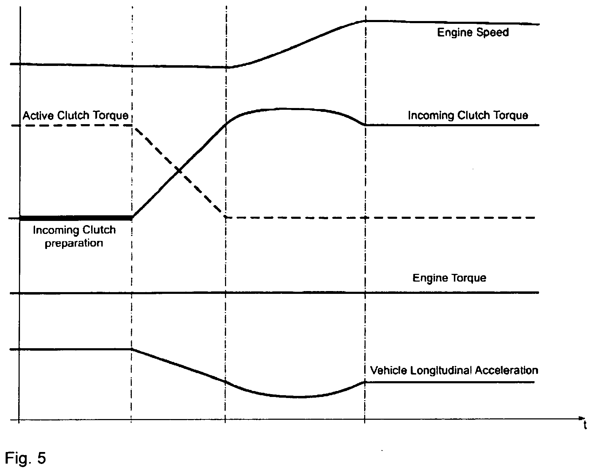

Figure 5 shows a braking downshift where the engine speed is synchronized to the incoming clutch speed by applying a lower additional torque on the incoming clutch in respect to the shift of Figure 3. This results in a shift where the discomfort or additional braking performance is less in amplitude but spread over a longer time period.

## Claims

1. A method of controlling a vehicle drive train having an engine and a double clutch transmission (1), said transmission (1) during braking downshift comprising two clutches (2A, 2B) one of which is transmitting engine braking torque being the active clutch whilst the other one constituting the incoming clutch associated with a lower gear, wherein there is a torque handover phase in which the overall engine braking torque transmitted by the active clutch and the incoming clutch is constant, followed by an engine synchronizing phase in which the engine speed is synchronized to the speed required by the lower gear, the incoming clutch transmitting, during the synchronizing phase, a torque which is higher than the overall engine braking torque, the vehicle being retarded by a braking moment of the engine after the engine synchronising phase is completed, **characterized in that** a motor control injects additional fuel for assisting engine speed synchronization during the synchronizing phase.

2. The method according to claim 1 wherein the duration of the synchronizing phase can be varied by a clutch control.

3. The method according to claim 1 or claim 2 wherein the amount by which the torque transmitted by the incoming clutch exceeds the overall engine braking torque during the synchronizing phase, can be varied by a clutch control.

4. The method according to claim 2 or claim 3 wherein the clutch control takes into account driving and environmental conditions.

5. The method according to any of the preceding claims wherein the actuation of the incoming clutch during the synchronizing phase can be calibrated.

## Patentansprüche

1. Verfahren zum Steuern eines Fahrzeugantriebsstrangs mit einem Motor und einem Doppelkupplungsgetriebe (1), wobei das Getriebe (1) während einer Bremsrückschaltung zwei Kupplungen (2A, 2B) umfasst, von denen eine, die ein Motorbremsmoment überträgt, die aktive Kupplung ist, während die andere die kommende Kupplung in Zusammenhang mit einem niedrigeren Gang ist, wobei es eine Momentübergangsphase gibt, in der das Motorbremsgesamtmoment, das durch die aktive Kupplung und die kommende Kupplung übertragen wird, konstant ist, gefolgt von einer Motorsynchronisierungsphase, in der die Motordrehzahl mit der durch den niedrigeren Gang erforderlichen Drehzahl synchronisiert wird, wobei die kommende Kupplung während der Synchronisierungsphase ein Moment überträgt, das höher als das Motorbremsgesamtmoment ist, wobei das Fahrzeug durch ein Bremsmoment des Motors verzögert wird, nachdem die Motorsynchronisierungsphase abgeschlossen ist, **dadurch gekennzeichnet, dass** eine Motorsteuerung zusätzlichen Kraftstoff einspritzt, um während der Synchronisierungsphase eine Motordrehzahlsynchronisierung zu unterstützen.

2. Verfahren nach Anspruch 1, wobei die Dauer der Synchronisierungsphase durch eine Kupplungssteuerung variiert werden kann.

3. Verfahren nach Anspruch 1 oder Anspruch 2, wobei der Betrag, um den das durch die kommende Kupplung übertragene Moment das Motorbremsgesamtmoment während der Synchronisierungsphase übersteigt, durch eine Kupplungssteuerung variiert werden kann.

4. Verfahren nach Anspruch 2 oder Anspruch 3, wobei die Kupplungssteuerung Fahr- und Umgebungsbedingungen berücksichtigt.

5. Verfahren nach einem der vorhergehenden Ansprüche, wobei die Betätigung der kommenden Kupplung während der Synchronisierungsphase abgestimmt werden kann.

## Revendications

1. Procédé de commande d'un train de roulement de véhicule comportant un moteur et une transmission à double embrayage (1), ladite transmission (1) comprenant pendant une rétrogradation de freinage deux embrayages (2A, 2B) dont l'un transmet un couple de freinage moteur et est l'embrayage actif tandis que l'autre est l'embrayage d'entrée associé à une vitesse inférieure, dans lequel il existe une phase de transfert de couple dans laquelle le couple de freinage moteur global transmis par l'embrayage actif et l'embrayage d'entrée est constant, suivie d'une phase de synchronisation du moteur dans laquelle le régime du moteur est synchronisé sur la vitesse nécessaire à la vitesse inférieure, l'embrayage d'entrée transmettant, pendant la phase de synchronisation, un couple qui est supérieur au couple de freinage moteur global, le véhicule étant retardé par un moment de freinage du moteur après que la phase de synchronisation du moteur a été achevée, **caractérisé en ce qu'**une commande moteur injecte du carburant supplémentaire pour faciliter la synchronisation du régime du moteur pendant la phase de synchronisation.

2. Procédé selon la revendication 1, dans lequel la durée de la phase de synchronisation peut être modifiée par une commande d'embrayage.

3. Procédé selon la revendication 1 ou 2, dans lequel la valeur par laquelle le couple transmis par l'embrayage d'entrée dépasse le couple de freinage moteur global pendant la phase de synchronisation peut être modifiée par une commande d'embrayage.

4. Procédé selon la revendication 2 ou 3, dans lequel la commande d'embrayage prend en compte des conditions de conduite et d'environnement.

5. Procédé selon l'une quelconque des revendications précédentes, dans lequel l'actionnement de l'embrayage d'entrée pendant la phase de synchronisation peut être calibré.
